# EUROPÄISCHE PATENTSCHRIFT

(11) **EP 2 700 581 B1**
(45) Veröffentlichungstag und Bekanntmachung des Hinweises auf die Patenterteilung: **14.06.2017**
(21) Anmeldenummer: 13181487.3
(22) Anmeldetag: 23.08.2013
(51) Int. Cl.: B65C 9/00, B67C 3/22, B29C 49/78, B65G 29/00, B29C 49/42

(54) **Vorrichtung und Verfahren zur Behandlung von Behältnissen mit einer mechanischen Bremseinrichtung**
Device and method for handling containers with a mechanical braking device
Dispositif et procédé de traitement de récipients avec un dispositif de freinage mécanique

(30) Priorität: 24.08.2012 DE 102012107812
(43) Veröffentlichungstag der Anmeldung: 26.02.2014
(73) Patentinhaber: Krones AG, 93073 Neutraubling (DE)
(72) Erfinder: Höllriegl, Thomas, 93073 Neutraubling (DE); Brunner, Andreas, 93073 Neutraubling (DE); Fleischmann, Hans Jürgen, 93073 Neutraubling (DE); Strauss, Johannes, 93073 Neutraubling (DE)
(74) Vertreter: Bittner, Bernhard

(56) Entgegenhaltungen:
- EP-A2- 2 226 274
- DE-A1- 2 745 314
- DE-A1- 3 436 922
- DE-A1-102008 010 895
- DE-U1-202009 017 157
- US-B1- 6 502 672

## Beschreibung

Die vorliegende Erfindung bezieht sich auf eine Vorrichtung sowie ein Verfahren zum Behandeln von Behältnissen mit einer Vielzahl von auf einem um eine Drehachse drehbaren Träger angeordneten Behandlungseinheiten gemäß den Oberbegriffen der vorliegenden Ansprüche 1 und 8. Eine gattungsgemäße Vorrichtung und ein gattungsgemäßes Verfahren sind aus der DE 3436922 A1 bekannt. Vorrichtungen zum Behandeln von Behältnissen sind beispielsweise Blasmaschinen bzw. Streckblasmaschinen, welche entsprechende Blasformen an einem drehbaren Träger aufweisen, um beispielsweise aus Kunststoff hergestellte Vorformlinge zu entsprechenden Behältnissen zu expandieren. Auch ein Auffüller bzw. Fülleinrichtungen zum Befüllen der expandierten Behältnisse mittels eines entsprechenden fließfähigen Mediums, wie beispielsweise eines flüssigen Mediums in der Getränkeherstellungsindustrie, kann unter einer Vorrichtung zum Behandeln von Behältnissen verstanden werden, wobei hierbei die entsprechenden Fülleinrichtungen beabstandet zueinander auf dem Träger angeordnet sind. Vorzugsweise sind die einzelnen Behandlungseinheiten, wie beispielsweise die Blasformen oder die Fülleinrichtungen auf einer Kreisbahn (kreisförmig) auf dem Träger, wie zum Beispiel einem Blasrad oder einem Füllrad angeordnet, welches sich mit einer entsprechenden Produktionsgeschwindigkeit um dessen zentrale (Dreh-)Achse dreht.

Zum Antrieb derartiger Räder bzw. Träger wird, wie aus dem allgemeinen Stand der Technik bekannt, ein Servomotor verwendet, welcher auch zum Bremsen des Trägers Anwendung finden kann. Die Masse des Trägers ist insbesondere vom Maschinentyp sowie der Anzahl der auf dem Träger angeordneten Behandlungseinheiten abhängig. Demzufolge kann bei einer entsprechend großen Masse des Trägers der Servomotor die Bewegung des Trägers nicht derart vollständig allein abbremsen, dass der Träger innerhalb einer definierten Zeitspanne zum Stillstand gelangt, so dass es erforderlich ist, zusätzlich eine oder mehrere mechanische Bremsen zum Abbremsen der Drehgeschwindigkeit des Trägers an diesem anzuordnen.

Beim Bremsen des Trägers wird angestrebt, eine im Wesentlichen lineare Verzögerung zu erreichen, wobei die mechanische Bremse jedoch ein wechselndes Drehmomentverhalten aufweist, so dass im Endeffekt diese Drehmomentschwankungen, welche ebenso durch diverse Kurven und insbesondere durch die Hauptkurve am Träger auftreten können, von dem Servomotor, das heißt dem Hauptantriebsmotor des Trägers, an welchen die Drehmomentschwankungen weitergeleitet werden, ausgeglichen werden müssen, insbesondere, um an entsprechenden Übergabestellen, bei welchen Behältnisse beispielsweise von einer Transporteinrichtung an den Träger oder von dem Träger an eine Transporteinrichtung übergeben werden, synchron (in der Bewegung) zu bleiben.

Das Wirkprinzip der mechanischen Bremse beruht im Wesentlichen darauf, eine Bewegung durch Reibung zwischen einem festen und dem bewegten Körper abzubauen.

Die Drehmomentschwankungen, welche unter anderem zum Beispiel während eines Not-Stopps durch beispielsweise die Erwärmung der Bremseinrichtung bzw. deren Bestandteile hervorgerufen werden und sich im Wesentlichen negativ auf eine Verzögerungsdauer der Drehgeschwindigkeit des Trägers auswirken können, sind dabei teilweise so groß, dass sie vom Antriebsmotor nicht mehr ausgeglichen werden können. Das Auftreten von starken Drehmomentschwankungen oder auch Schwingungen bei insbesondere großen Massen der Träger begründet sich z.B. unter anderem auch darin, dass der Träger mit den entsprechend angeordneten Behandlungseinheiten selbst aus Kostengründen nicht ausreichend steif konstruiert werden kann.

Des Weiteren werden beispielsweise auch die Antriebszüge aus Kostengründen nicht ausreichend dimensioniert, um die zusätzlich entstehenden Drehmomente zu bewältigen. Demzufolge weist folglich der Träger das Verhalten eines Zweimassenschwingers mit niedriger Resonanzfrequenz auf. Das heißt, dass in einer Situation, in welcher die Drehgeschwindigkeit des Trägers unmittelbar gestoppt werden muss, dies nur mit einer sehr hohen Verzögerung einhergeht. Das Drehmoment, welches für diese Verzögerung benötigt wird, übersteigt folglich das Antriebsmotorspitzendrehmoment um ein Vielfaches. Das heißt, da das zur Verfügung stehende Drehmoment des Antriebsmotors sowie der mechanischen Bremse des Trägers gleichzeitig und vollständig bei einer entsprechenden Notaus-Situation (Situation, in welcher die Rotations- bzw. Drehbewegungsgeschwindigkeit des Träger innerhalb einer definierten Zeitdauer bis zum vollständigen Stillstand der Drehbewegung des Trägers abgebremst bzw. verzögert werden muss) auf den Träger aufgeschaltet werden, entstehen durch das konstruktiv bedingte Verhalten des Trägers starke Schwingungen insbesondere zwischen den Baugruppen des Trägers, was zur Folge hat, dass die auftretenden Spitzendrehmomente am Antriebsmotor um ein Vielfaches höher sind, als erforderlich, um die Masse des Trägers in einer definierten Zeit zum Stillstand zu bringen.

Dieser Effekt wird in der Servoantriebstechnik mit einer sogenannten Ruckbegrenzung abgemildert, wobei die Beschleunigung/Verzögerung und damit das Drehmoment linear erhöht und wieder abgebaut werden. Da jedoch das Drehmoment für den Bremsvorgang des Trägers bzw. der Drehgeschwindigkeit des Trägers insbesondere von der mechanischen Bremse herrührt, ist es erforderlich, dieses Drehmoment einzustellen bzw. regeln zu können.

Demnach ist es die Aufgabe der vorliegenden Erfindung, das Zusammenspiel des Antriebsmotors und der mechanischen Bremse derart zu verbessern, dass insbesondere in einer Notaus-Situation ein direkter Einfluss auf die Drehmomentschwankungen der Bremse derart vorgenommen werden kann, dass die Drehbewegung des Trägers in kürzester Zeit bis zum vollständigen Stillstand abgebremst bzw. verzögert werden kann, wobei insbesondere zudem die Kosten des Trägers sowie der Antriebseinrichtung reduziert und folglich die Komponenten zur Ansteuerung des Trägers kleiner dimensioniert werden sollen.

Diese Aufgabe löst die vorliegende Erfindung mittels einer Vorrichtung gemäß Anspruch 1 sowie einem Verfahren gemäß Anspruch 8. Vorteilhafte Ausführungsformen und Weiterbildungen sind Gegenstand der Unteransprüche.

Demnach wird eine Vorrichtung zum Behandeln von Behältnissen mit einer Vielzahl von auf einem um eine Drehachse drehbaren Träger angeordneten Behandlungseinheiten beansprucht, welche die Behältnisse in einer vorgegebenen Weise behandeln, mit einer Antriebseinrichtung zum Antreiben des Trägers und mindestens einer den Träger zumindest zeitweise kontaktierenden mechanischen Bremseinrichtung zum Verzögern einer Drehgeschwindigkeit des Trägers.

Die Bremseinrichtung weist erfindungsgemäß mindestens ein Ventil auf, welches mittels einer in Kommunikationsverbindung mit der Bremseinrichtung stehenden Steuerungseinrichtung derart variabel schaltbar ist, dass ein Ableiten oder ein Zuleiten von einem unter Druck stehenden fließfähigen Medium aus oder zu einem Reservoir der Bremseinrichtung an oder von einem Bremszylinder der Bremseinrichtung zur Erreichung einer Bremswirkung individuell durchführbar ist.

D.h., dass vorzugsweise mittels einer geregelten bzw. regelbaren Bremse bzw. Bremseinrichtung , die Bremskraft vorteilhaft bei einem Drehmomentanstieg reduziert und bei einem Drehmomentabfall gesteigert wird, um folglich die Drehmomentschwankungen im Wesentlichen über die Bremse bzw. die Bremseinrichtung zu minimieren bzw. auszugleichen.

Folglich steht vorteilhaft die Bremse bzw. die Bremseinrichtung zumindest zeitweise und bevorzugt dauerhaft mit dem Träger in Kontakt, um die Bremsleistung der Bremseinrichtung an die Drehzahl des Trägers und die Auslenkungen der Schwingungen bzw. Vibrationen bzw. Schwankungen anzupassen. Obwohl sich dadurch beispielsweise eventuell auch die Antriebsleistung erhöhen könnte, werden jedoch zudem Antriebsschwankungen hinreichend reduziert und demzufolge ein wesentlich ruhigerer Lauf der Antriebsmaschine erreicht.

Vorzugsweise finden alle aus dem allgemeinen Stand der Technik bekannten Bremsen hierfür Anwendung.

Dabei ist das Ventil vorzugsweise ein pneumatisches bzw. ein mittels eines pneumatischen Mediums agierendes bzw. wirkendes Ventil oder auch vorteilhaft ein hydraulisches bzw. ein mittels eines hydraulischen Mediums agierendes bzw. wirkendes Ventil.

Bevorzugt ist folglich ein pneumatisches Medium bzw. ein Pneumatikmedium ein gasförmiges Medium, wie beispielsweise Druckluft, während ein hydraulisches Medium bzw. ein Hydraulikmedium ein flüssiges Medium, wie beispielsweise Wasser, Öl usw. ist.

Das entsprechende Reservoir der Bremseinrichtung kann demnach ein Pneumatikreservoir zur Aufnahme eines pneumatischen fließfähigen Mediums (Luftreservoir) oder ein Hydraulikreservoir zur Aufnahme eines hydraulischen fließfähigen Mediums (Ölreservoir) sein.

Da bei bekannten mechanischen Bremsen und insbesondere bei bekannten Luftdruckbremsen, welche beispielsweise im entlüfteten Zustand eine Bremswirkung entfalten, auf die extremen Drehmomentschwankungen dieser Bremse bekannterweise kein Einfluss mehr genommen werden kann, ist erfindungsgemäß mindestens ein pneumatisches oder hydraulisches Ventil, oder auch zwei oder mehr Ventile, in der Bremseinrichtung angeordnet, welches folglich derart gesteuert bzw. geregelt werden kann, dass dieses Ventil beispielsweise eine definierte und steuerbare bzw. regelbare Menge an einem unter Druck stehenden fließfähigen Medium in den Bremszylinder einlässt oder aus den Bremszylinder auslässt, um eine Bremswirkung zu erreichen.

Die vorliegende Erfindung wird hier unter Bezugnahme auf pneumatisch wirkende Bremsen bzw. Bremseinrichtungen beschrieben, wobei jedoch darauf hingewiesen wird, dass die Erfindung auch auf hydraulisch wirkende Bremsen bzw. Bremseinrichtungen anwendbar ist.

Die aus dem allgemeinen Stand der Technik bekannten mechanischen Bremsen, wie beispielsweise die Druckluftbremse, werden vorteilhaft während des Betriebes des Trägers und dessen Behandlungseinheiten, das heißt folglich während der Behandlung der Behältnisse mithilfe von Druckluft über ein entsprechendes Ventil gelüftet, wobei bei einem erforderlichen Stopp bzw. Anhalten (z.B. bei einer Notaus-Situation) des Trägers die Bremse über dieses Ventil entlüftet wird, sodass die Bremse folglich ihre Bremswirkung entfaltet.

Dabei ist es möglich, dass zum Erreichen einer Bremswirkung ein Bremszylinder mit Druckluft beaufschlagt wird, oder, dass zum Erreichen einer Bremswirkung Druckluft dem Bremszylinder entnommen wird.

Demnach wird durch eine variable Schaltung des Ventils ein für die Betätigung der Bremse notwendiger Arbeitsdruck geregelt. Bevorzugt wird also die Bremse bzw. die Bremseinrichtung gesteuert bzw. geregelt.

Wie oben bereits erwähnt, kann der drehbare Träger, welcher sich um eine zentrale Drehachse mit einer definierten Geschwindigkeit während der Bearbeitung der Behältnisse dreht, beispielsweise ein Blasrad oder auch ein Füllrad sein. Dementsprechend können die Behältnisse beispielsweise durch Expansion von einem Kunststoffvorformling zu einem Kunststoffbehältnis mithilfe einer Blasform bzw. einer Blasstation expandiert werden (Träger ist ein Blasrad) oder auch während der Bearbeitung mit einem entsprechenden fließfähigen Medium befüllt werden (Träger ist ein Füllrad). Vorteilhaft handelt es sich bei der Vorrichtung um eine Blasmaschine, bevorzugt um eine sogenannte Streckblasmaschine. Es ist jedoch auch denkbar, dass die Vorrichtung eine Verschließmaschine zum Verschließen der Behältnisse, eine Sterilisationsmaschine zum Sterilisieren der Innen- und/oder Außenwandungen der Behältnisse oder eine Etikettiermaschine zum Etikettieren der Behältnisse usw. ist.

Folglich dient bevorzugt als Stellgröße der Anpassung bzw. Regelung der pneumatischen oder hydraulischen Ventile der Druck, mit welchem die Bremsen bzw. Bremseinrichtungen be- oder entlüftet werden. Dabei ist der Druck annähernd linear zur Bremskraft. Als Regelabweichung kann der Schleppfehler (SOLL-IST-Position) der Motorregelung (ermittelt über die Steuereinrichtung) dienen. D.h., ist das Drehmoment der Bremse bzw. der Bremseinrichtung zu gering, eilt die Motorposition der Sollposition voraus und der Schleppfehler wird negativ. Ist dagegen das Drehmoment der Bremseinrichtung zu groß, eilt die Motorposition der Sollposition hinterher und der Schleppfehler wird positiv. Unter Berücksichtigung der eingetretenen oder eintretbaren Schleppfehler wird folglich ein Regelkreis für die Regelung der Bremskraft erstellt, um auftretende Abweichungen (IST) von dem zu erwartenden Bremsmoment (SOLL) ausregeln zu können.

Es wäre auch möglich als Regelabweichung die Abweichung zwischen Motor-SOLL-Strom und Motor-IST-Strom zu verwenden. Dabei kann mittels der Modellierung einer idealen Last mit einer gewissen Massenträgheit und Reibung vorausgesagt werden, wie hoch der Motorstrom während eines Bremsvorganges (z.B. bei einem Notaus) sein sollte. Weicht der Wert des Motor-IST-Strom von dem Wert des Motor-SOLL-Stroms ab, wird dies vorteilhaft durch eine Regelung der Bremskraft kompensiert.

Die benannte Antriebseinrichtung ist vorzugsweise ein Elektromotor, der sowohl zum Beschleunigen als auch zum Verzögern des Trägers dient. Vorzugsweise kann insbesondere ein sogenannter Torquemotor bzw. Langsamläufer vorgesehen sein, welcher eine hohe Polzahl und zumeist einen ringförmigen genuteten Rotor mit einem großen Durchmesser aufweist. Typische Drehzahlbereiche derartiger Torquemotoren liegen zwischen 1 U/min. und zirka 1.200 U/min., wobei sich folglich mit derartigen Torquemotoren insbesondere hohe Drehmomente bis 4.000 Nm und damit ein Direktanschluss (ohne Zwischengetriebe), wie an dem benannten Träger, ermöglichen.

Vornehmlich weist die Antriebseinrichtung ein drehfest mit dem Träger ausgebildetes Abtriebsrad zum Drehen des Trägers sowie einen entsprechenden Antriebsmotor auf. Bevorzugt werden die Behandlungseinheiten durch den Träger auf einer kreisförmigen Bahn bewegt, so dass auch die entsprechend mit den Behandlungseinheiten zu behandelnden Behältnisse während ihrer Behandlung auf dieser kreisförmigen Bahn bewegt werden. In einer bevorzugten Ausführungsform weist die Antriebseinrichtung ein mit dem Antriebsmotor beispielsweise an einer Abtriebswelle des Antriebsmotors angeordnetes Antriebsrad auf, und dieses Antriebsrad wirkt direkt mit dem Abtriebsrad zum Drehen des Trägers zusammen. Dabei ist es möglich, dass die drehfeste Verbindung zwischen dem Träger und dem Abtriebsrad derart gestaltet sein kann, dass der Träger über eine Antriebswelle drehbar ist und an dieser Antriebswelle wiederum das Abtriebsrad angeordnet ist.

Bei einer weiteren vorteilhaften Ausführungsform ist jedoch dieses Abtriebsrad direkt mit dem Träger ausgebildet bzw. direkt an dem Träger angeordnet, so dass beispielsweise der Träger selbst eine Außenverzahnung aufweist oder ein Abtriebsrad mit einer entsprechen Außenverzahnung aufweist, in welcher das Antriebsrad eingreift. Unter einem direkten Zusammenwirken wird verstanden, dass keine weiteren Abtriebsräder zwischen dem Antriebsrad und dem Abtriebsrad angeordnet sind und auch kein Riemen oder andere Kraftübertragungsmittel vorgesehen sind.

Vorteilhaft weisen die auf dem drehbaren Träger angeordneten Behandlungseinheiten eine Zuführung auf, welche den Behältnissen ein fließfähiges Medium zuführt. Im Falle eines Blasrades als Träger bzw. Tragrad kann es sich um beispielsweise ein gasförmiges Medium wie Druckluft handeln, welche zum Expandieren der Behältnisse dient. Im Falle eines Füllrades als Träger bzw. Tragrad kann es sich dagegen auch um ein flüssiges Medium, wie beispielsweise das Getränkeprodukt, mit welchem die Behältnisse befüllt werden sollen, handeln. Im Falle einer Sterilisationseinrichtung bzw. -maschine als Träger bzw. Tragrad kann dagegen über die Zuführung auch ein entsprechendes Sterilisationsmedium (flüssig oder gasförmig) in Richtung der zu behandelnden Behältnisse transportiert werden.

Weiterhin weist vorteilhaft auch jede Behandlungseinheit wenigstens ein bewegliches Element auf, welches in einer zumindest auch zu einer Bewegungsrichtung der Behältnisse senkrecht stehenden Richtung bewegbar ist. Bei diesem beweglichen Element kann es sich beispielsweise um eine Blasdüse handeln, um ein Element, welches Verschlüsse auf die Behältnisse aufbringt, um eine Reckstange oder auch um eine Einfülleinrichtung für ein Geträn k.

Bei einer weiteren bevorzugten Ausführungsform weist jede Behandlungseinheit ein Greifelement auf, welches die Behältnisse in einem bestimmten Bereich der Behältnisse, wie beispielsweise dem Halsbereich der Behältnisse und insbesondere unterhalb eines Tragrings oder einem Sicherungsring der Behältnisse, greift. Bei diesen Greifelementen kann es sich beispielsweise um Greifklammern handeln, welche die Behältnisse insbesondere an oder unterhalb des Tragrings der Behältnisse greifen.

Die Bremseinrichtung ist vorzugsweise, wie die Antriebseinrichtung, in einem Bereich am Außenumfang des Trägers angeordnet, um bei Bedarf bzw. Auslösen der Bremseinrichtung derart einen Bereich und vornehmlich einen Außenbereich des Trägers zumindest zeitweise zu kontaktieren, dass aufgrund der zwischen der Bremseinrichtung und dem Träger entstehende Haltkraft die Drehgeschwindigkeit des Trägers, vorzugsweise bis zum Stillstand, verzögert bzw. abgebremst wird. Je nach Masse des Trägers sowie je nach aktueller Drehgeschwindigkeit während der Behandlung der einzelnen Behältnisse mittels der entsprechenden Behandlungselemente muss die Bremse eine definierte Bremswirkung auf den Träger ausüben, um diesen bis zum Stillstand abbremsen zu können.

Demnach ist folglich eine Steuerungseinrichtung, welche vorzugsweise auch zur Steuerung der Antriebseinrichtung zum Antreiben des Trägers dient, derart mit der Bremseinrichtung verbunden, dass beim Einleiten eines Bremsvorganges, beispielsweise aufgrund eines Notstopps, die Steuereinrichtung das pneumatische bzw. hydraulische Ventil derart steuern kann, dass abhängig von der aktuell von der Steuerungseinrichtung ermittelten Drehgeschwindigkeit des Trägers und auch eingeleiteten Bremskraft der Antriebseinrichtung, welche ebenfalls als zusätzliche Bremseinrichtung wirken kann, ein entsprechender Arbeitsdruck zur Verfügung gestellt wird.

Das heißt, dass die Steuerungseinrichtung wesentliche Gegebenheiten des Trägers, wie der Trägermasse oder der Trägerdrehgeschwindigkeit, sowie auch der Antriebseinrichtung, wie beispielsweise die Verzögerungsleistung usw., ermittelt und dementsprechend das pneumatische bzw. hydraulische Ventil der mechanischen Bremseinrichtung ansteuert, so dass folglich das Ventil automatisch eine vordefinierte Menge an unter Druck stehendem bzw. mit Druck beaufschlagtem fließfähigen Medium (Druckluft) aus den Bremszylinder bzw. in den Bremszylinder hineinlässt, um eine definierte Bremswirkung auf den Träger zu erwirken.

Zwischen der Bremseinrichtung und der Steuerungseinrichtung besteht folglich vorteilhaft eine bidirektionale Kommunikationsverbindung, über welche zum einen die Steuerungseinrichtung Werte bezüglich der Bremseinrichtung, wie beispielsweise dem aktuell vorliegenden Arbeitsdruck, empfängt und zum anderen Befehle an die Bremseinrichtung und insbesondere das pneumatische bzw. hydraulische Ventil zum Einstellen des pneumatischen bzw. hydraulischen Ventils bezüglich der durchzulassenden Menge an Druckluft bzw. Hydraulikmedium versendet. Eine entsprechende bidirektionale Verbindung findet sich vorzugsweise auch zwischen der Steuerungseinrichtung und der Antriebseinrichtung selbst. Das heißt, dass die Steuerungseinrichtung folglich Daten bezüglich des aktuell vorliegenden Drehmomentes der Antriebseinrichtung empfängt, um bei Einleitung eines Verzögerungsvorganges dieser Antriebseinrichtung auch Daten bezüglich eines entsprechenden (erforderlichen) Verzögerungsmomentes übertragen zu können.

In einer bevorzugten Ausführungsform ist das pneumatische bzw. hydraulische Ventil ein Proportionalventil bzw. ein Proportionalwegeventil, welches unter Einsatz eines Proportionalmagneten einen stetigen Übergang der Ventilöffnung ermöglicht. Demzufolge kann mithilfe des Proportionalventils beispielsweise das Medium der Druckluft (oder auch das Hydraulikmedium) zur Betätigung der Bremswirkung in Abhängigkeit einer elektronischen Eingangsgröße variiert werden. Das Proportionalventil regelt folglich den Ausgangsdruck in einem geschlossenen Regelkreis proportional zum vorgegebenen Sollwertsignal, so dass der Ausgangsdruck folglich konstant mit einem gewünschten Sollwert verglichen und permanent eingeregelt wird.

Demzufolge wird unter Berücksichtigung einer gewünschten linearen Verzögerung der Drehgeschwindigkeit des Trägers dem Proportionalventil über die Steuerungseinrichtung der definierte bzw. gewünschte Sollwert vorgegeben und unter Berücksichtigung der auftretenden Drehmomentschwankungen, beispielsweise ausgelöst durch eine Bremswirkung der Antriebseinrichtung oder auch durch die Bremswirkung der Bremseinrichtung selbst, der Ausgangsdruck durch das Proportionalventil selbst entsprechend angepasst, so dass folglich die auf den Träger wirkende Bremswirkung unter Berücksichtigung der genannten Faktoren individuell eingestellt werden kann. Das heißt, dass beispielsweise zu Beginn der eingeleiteten Verzögerung eine höhere oder auch geringere Bremswirkung auf den Träger aufgebracht wird, als beispielsweise während des Verzögerungsvorgangs, wenn die Drehgeschwindigkeit des Trägers nahezu Null ist.

In einer weiteren bevorzugten Ausführungsform weist die Bremseinrichtung mindestens zwei oder mehr Ventile und insbesondere pneumatische oder hydraulische Ventile auf, welche unabhängig zueinander mittels der benannten Steuerungseinrichtung geschalten werden können. Dabei ist es zudem denkbar, dass die mindestens zwei Ventile ein zueinander unterschiedliches Druckniveau aufweisen, so dass der Bremszylinder während einer ersten Bremszeitdauer mit einem ersten Arbeitsdruck bzw. einer definierten ersten Menge an Druckluft bzw. Hydraulikmedium mittels dem ersten Ventil und demnach während einer zweiten Bremszeitdauer, welcher sich der ersten Bremszeitdauer anschließt, mit einem zweiten Arbeitsdruck bzw. einer definierten zweiten Menge an Druckluft bzw. Hydraulikmedium mittels dem zweiten Ventil gespeist wird bzw. diese Druckluft bzw. der Arbeitsdruck bzw. das unter Druck stehende Hydraulikmedium aus dem Bremszylinder entnommen wird.

Dabei ist es des Weiteren auch denkbar, dass der zweiten Bremszeitdauer unter Einsatz des zweiten Ventils nachfolgend eine dritte Bremszeitdauer unter Einsatz wieder des ersten Ventils anschließt usw. Durch den Einsatz derartig schaltbarer Ventile innerhalb einer Bremsvorrichtung können vorteilhaft auf den Träger während des Verzögerungsvorganges wirkende Drehmomentschwankungen ausgeglichen werden, um eine im Wesentlichen und zumindest zeitweise lineare Verzögerung der Drehgeschwindigkeit des Trägers realisieren zu können.

Dabei ist es möglich, dass die Bremseinrichtung kein Proportionalventil, bevorzugt ein Proportionalventil und besonders bevorzugt zwei und mehr Proportionalventile aufweist, wobei auch jedes in einer Bremseinrichtung angeordnete pneumatische oder hydraulische Ventil ein Proportionalventil sein kann.

Es ist auch denkbar, dass eine Mehrzahl von Bremseinrichtungen an einem Außenumfang des Trägers beabstandet zueinander angeordnet ist. Das heißt, dass beispielsweise zwei oder drei oder mehr Bremseinrichtungen im Wesentlichen verteilt, das heißt einen gleichen Abstand zueinander und bevorzugt auch zu der Antriebseinrichtung aufweisend, am Außenumfang des Trägers angeordnet sind, um die Drehgeschwindigkeit des Trägers bei Einleitung eines Verzögerungsvorganges vorzugsweise bis zum Stillstand zu verzögern bzw. abzubremsen. Dabei können die einzelnen Bremseinrichtungen beispielsweise jeweils mindestens ein Proportionalventil aufweisen und/oder auch Ventile unterschiedlichster Ausgestaltung. Vorzugsweise weist jede Bremseinrichtung eine Kommunikationsverbindung mit der Steuerungseinrichtung auf, so dass in einer bevorzugten Ausführungsform die Bremseinrichtungen und insbesondere die Ventile der Bremseinrichtungen abwechselnd und unabhängig zueinander mittels der Steuerungseinrichtung schaltbar sind.

Vorzugsweise weist die Bremseinrichtung mindestens ein insbesondere vorgespanntes Federelement zum Aufbringen einer Bremskraft auf, wobei die Bremskraft vornehmlich auf einen entsprechenden Bremsklotz der Bremseinrichtung, welcher mit einer Bremsscheibe oder auch mit einer Bremstrommel wechselwirkt, aufgebracht wird. Das heißt, dass die Bremskraft von dem Bremsklotz mit einer Bremsscheibe wechselwirkt, welche sich beispielsweise zumindest teilweise in Umfangsrichtung des Trägers erstreckt und im Wesentlichen am Außenumfang des Trägers angeordnet ist. In dieser Ausführungsform kontaktiert die Bremseinrichtung und insbesondere der Bremsklotz bzw. der Bremsbelag des Bremsklotzes der Bremseinrichtung vornehmlich lediglich während des Bremsvorgangs (zeitweise) zumindest einen Bereich und insbesondere den Außenumfang des Trägers, um die Drehgeschwindigkeit durch Aufbringen einer Reibkraft folglich zu reduzieren bzw. abzubremsen.

Es ist jedoch auch denkbar, dass die Bremsvorrichtung auch während des Behandlungsprozesses der Behältnisse in Kontakt mit dem Träger steht und folglich eine zur Drehgeschwindigkeit des Trägers angepasste Drehgeschwindigkeit um deren eigene Drehachse aufweist. Hierbei würde während des Brems- bzw. Verzögerungsvorgangs eine Kontaktierung zwischen dem Bremsklotz bzw. dem Bremsbelag des Bremsklotzes der Bremseinrichtung und insbesondere einer Bremstrommel oder auch einer Bremsscheibe, welche ebenfalls ein Bestandteil der Bremseinrichtung darstellt, erfolgen, um die Drehgeschwindigkeit der Bremseinrichtung zu reduzieren und dadurch folglich auch die Drehgeschwindigkeit des mit der Bremseinrichtung in Wirkverbindung stehenden Trägers.

Vornehmlich ist das Federelement in der Bremseinrichtung im Bereich des Bremszylinders angeordnet und derart vorgespannt, dass bei beispielsweise einem Belüften oder auch bei einem Entlüften des Bremszylinders bzw. der Druckkammer des Bremszylinders eine Bewegung des Bremsklotzes, welcher zudem Bremsbeläge aufweisen kann, in Richtung der Bremsscheibe oder auch einer Bremstrommel ausgelöst wird, um eine Kontaktierung zwischen dem Bremsklotz und der Bremsscheibe bzw. der Bremstrommel zu erwirken.

Vorteilhaft ist die Antriebseinrichtung des Trägers ein Direktantrieb zum Antreiben des Trägers, wobei der Direktantrieb sich gegenüber bekannten herkömmlichen Antrieben dadurch auszeichnet, dass dieser ohne Getriebe und verschleißbehaftete Komponenten auskommt. Auf diese Weise lassen sich Reibungsverluste im System verhindern und folglich die Energiebilanz positiv steigern. Zudem steigt der Gesamtwirkungsgrad und die zugeführte Leistung wird effizienter genutzt. Des Weiteren können auch Folgekosten durch den Einsatz von Direktantrieben vermieden werden. Ein weiterer Vorteil besteht darin, dass Direktantriebe nahezu geräuschlos laufen und deren Betrieb sich folglich lärmmindernd auswirkt. Auch weist der Direktantrieb im Vergleich zu herkömmlichen Antrieben eine kompakte Bauform mit geringem Platzbedarf auf. Da der Direktantrieb insbesondere auch ohne zwischengeschaltetes Ritzel auskommt, ist dieser Direktantrieb demnach als wartungsarm zu bezeichnen.

Vorteilhaft greift, wie bereits oben aufgeführt, die Antriebseinrichtung an einen Außenumfang des Trägers an, wobei ein Antriebsrad, angetrieben direkt oder indirekt über einen Antriebsmotor, in ein Abtriebsrad, angeordnet an dem oder auch ein Bestandteil des Trägers, eingreift und dessen Drehgeschwindigkeit entsprechend überträgt.

Des Weiteren wird ein Verfahren zum Behandeln von Behältnissen mit einer Vielzahl von auf einem um eine Drehachse drehbaren Träger angeordneten Behandlungseinheiten beansprucht, welche die Behältnisse in einer vorgegebenen Weise behandeln, wobei mittels mindestens einer Antriebseinrichtung der Träger angetrieben und mittels mindestens einer den Träger zumindest zeitweise kontaktierenden mechanischen Bremseinrichtung eine Drehgeschwindigkeit des Trägers verzögert wird.

Erfindungsgemäß wird für eine Verzögerung der Drehgeschwindigkeit des drehbaren Trägers ein Ventil der Bremseinrichtung derart durch eine mit der Bremseinrichtung in Kommunikationsverbindung stehende Steuerungseinrichtung variabel geschaltet, dass ein unter Druck stehendes fließfähiges Medium, wie beispielsweise ein hydraulisches oder pneumatisches Medium aus oder in ein Reservoir der Bremseinrichtung an oder von einem Bremszylinder der Bremseinrichtung individuell, d.h. unter Berücksichtigung der aktuell vorliegenden Gegebenheiten, wie der momentanen Drehgeschwindigkeit des Trägers, dessen Masse usw., abgeleitet wird.

Folglich ist es denkbar, dass das variabel schaltbare Ventil ein pneumatisches oder hydraulisches Ventil ist.

D.h., dass bevorzugt in Abhängigkeit der vorliegenden Masse des Trägers sowie der momentan ermittelten Drehgeschwindigkeit des Trägers usw. während der Behandlung der Behältnisse ein Moment ermittelt wird, mittels welchem der Träger bei Einleitung einer Verzögerung der Drehgeschwindigkeit des Trägers abgebremst werden muss, um innerhalb eines definierten Zeitraumes und/oder innerhalb einer definierten Bewegungsbahn zum Stillstand zu gelangen. Nach Ermittlung eines entsprechenden Sollwertes (Moment der Verzögerung) wird das zumindest eine Ventil der Bremseinrichtung derart geschaltet bzw. geöffnet bzw. geschlossen, dass jeweils (pro Schaltvorgang) z.B. ein definierter Luftstrom an Druckluft bzw. Arbeitsdruckluft oder eine definierte Menge an Hydraulikmedium in einen Bremszylinder bzw. einen Druckluftraum oder Mediumraum des Bremszylinders hinein oder aus diesen hinausströmen kann, um eine definierte Bremswirkung des mit dem Bremszylinder verbundenen Bremsklotzes auf eine entsprechende Bremsscheibe bzw. eine entsprechende Bremstrommel auszuüben.

In einer bevorzugten Ausführungsform kann - wie oben bereits aufgezeigt - eine Mehrzahl, wie beispielsweise zwei, drei oder mehr Bremseinrichtungen, beabstandet zueinander in Umfangsrichtung um den Träger angeordnet sein, wobei jede Bremseinrichtung ein eigenes pneumatisches oder hydraulisches Ventil aufweist, so dass diese Ventile von mehreren den Träger kontaktierenden Bremseinrichtungen durch die Steuerungseinrichtung abwechselnd und unabhängig zueinander geschaltet werden können. Das heißt, dass je nach Bedarf das bzw. die Ventile einer Bremseinrichtung oder die Ventile der Mehrzahl der Bremseinrichtungen zeitgleich oder zeitversetzt zueinander aktiviert werden, wobei jede Bremseinrichtung eine definierte Bremswirkung auf den Träger ausüben kann. Die Bremswirkungen der einzelnen Bremseinrichtungen können dabei unterschiedlich zueinander sein und bestimmen sich insbesondere aus der durch die Steuerungseinrichtung ermittelten Werte der Masse des Trägers, der aktuell vorliegenden Drehgeschwindigkeit des Trägers und/oder der ermittelten Schwingungen bzw. Drehmomentschwankungen des Trägers.

Das heißt, dass bei einem Einleiten einer Verzögerung der Drehgeschwindigkeit des Trägers einzelnen Bremszylindern der Bremseinrichtungen über die Ventile der Bremseinrichtungen unterschiedlich große Mengen an fließfähigem und vornehmlich unter Druck stehendem Medium, wie z.B. Druckluft zugeführt oder abgeführt werden kann.

Jedoch ist es auch hier möglich, dass lediglich eine mechanische Bremse bzw. Bremseinrichtung zum Verzögern der Drehgeschwindigkeit des Trägers wirkt, wobei diese Bremseinrichtung beispielsweise zwei oder mehr pneumatische oder hydraulische Ventile aufweist, die unabhängig voneinander geschalten werden können und auch ein zueinander unterschiedliches Druckniveau aufweisen bzw. einstellen können.

Des Weiteren kann die Bremseinrichtung vorteilhaft lediglich auch insbesondere ein einziges pneumatische oder hydraulisches Proportionalventil oder auch zwei oder mehr Proportionalventile aufweisen, welches proportional zum beaufschlagten Druck geschaltet wird.

Vornehmlich agiert die Antriebseinrichtung selbst zumindest zeitweise als eine zusätzliche Bremseinrichtung bei der Verzögerung der Drehgeschwindigkeit des Trägers. Das heißt, dass bei Einleitung eines Verzögerungsvorgangs der Drehgeschwindigkeit des Trägers nicht nur die mechanische Bremseinrichtung selbst durch die Steuerungseinrichtung angesteuert wird, sondern auch, dass die Antriebseinrichtung von der Steuerungseinrichtung den Befehl erhält, ihr Drehmoment entsprechend definierten Vorgaben zu reduzieren, so dass der Antriebsmotor der Antriebseinrichtung folglich eine Motorbremse realisiert bzw. hervorruft.

Vorzugsweise wird die Drehgeschwindigkeit des Trägers innerhalb einer Drehbewegung von maximal 270° des Trägers um seine Drehachse vollständig verzögert. Das heißt, dass innerhalb einer Drehbewegung von maximal 270° von einem Ausgangspunkt, ermittelt ab Einleitung des Verzögerungsvorgangs, der Träger und insbesondere die Drehbewegung bzw. Geschwindigkeit des Trägers vollständig bis zum Stillstand abgebremst wird.

Dank eines definierten Regelns bzw. Steuerns der Bremseinrichtung ist es auch denkbar, dass die Bremseinrichtung überdimensioniert werden kann, wodurch vorteilhaft auftretende Verschleißerscheinungen an der Bremseinrichtung bzw. einzelnen (Bestand-)Teilen der Bremseinrichtung durch eine Anpassung der Bremsansteuerung kompensiert werden können.

Vornehmlich ist die erfindungsgemäße Vorrichtung ein Bestandteil einer Anlage zum Behandeln von Behältnissen, welche zudem eine erste um eine vorgegebene Drehachse angeordnete Transporteinrichtung zum Zuführen der zu behandelnden Behältnisse der Vorrichtung und eine zweite um eine vorgegebene Drehachse angeordnete Transporteinrichtung zum Abführen der behandelten Behältnisse von der Vorrichtung aufweist. Insbesondere weisen neben der erfindungsgemäßen Vorrichtung auch die erste sowie die zweite Transporteinrichtung jeweils eine eigene Antriebseinrichtung zum Antreiben der ersten bzw. zweiten Transporteinrichtung auf, so dass folglich zumindest drei Antriebseinrichtungen, welche insbesondere Direktantriebe darstellen, in der Anlage angeordnet sind.

In einer weiteren bevorzugten Ausführungsform stehen die Antriebseinrichtungen, das heißt die Antriebseinrichtungen der ersten Transporteinrichtung, die Antriebseinrichtung der zweiten Transporteinrichtung sowie die Antriebseinrichtung der erfindungsgemäßen Vorrichtung, jeweils in Kommunikationsverbindung mit der Steuereinrichtung, welche auch als zentrale Steuereinrichtung benannt werden kann. Vornehmlich werden die jeweiligen Antriebseinrichtungen sowie auch die benannte Bremseinrichtung von der Steuerungseinrichtung derart zueinander synchronisiert, dass während einer Behandlung der Behältnisse die Zuführtransporteinrichtung, die erfindungsgemäße Vorrichtung sowie die Abführtransporteinrichtung im Wesentlichen eine zueinander identische bzw. eine aufeinander abgestimmte Drehgeschwindigkeit aufweisen, um eine problemfreie Übergabe der Behältnisse von der Zuführtransporteinrichtung zur erfindungsgemäßen Vorrichtung und von der erfindungsgemäßen Vorrichtung zu der Abfülltransporteinrichtung zu gewährleisten.

Das bedeutet, dass mittels der Steuereinrichtung ein synchroner Lauf der einzelnen Antriebseinrichtungen bzw. Servomotoren zueinander hergestellt werden kann. Des Weiteren soll im Falle des Einleitens eines Verzögerungsvorganges der Drehgeschwindigkeit des Trägers auch eine Reduzierung des Drehmoments der jeweiligen Antriebseinrichtungen der Zuführtransporteinrichtung, der Abführtransporteinrichtung und der erfindungsgemäßen Vorrichtung ermöglicht werden. Demnach ist die Steuerungseinrichtung derart mit den einzelnen Antriebseinrichtungen und der Bremseinrichtung bzw. den einzelnen Bremseinrichtungen verbunden, dass während eines Verzögerungsvorganges eine kontinuierliche und zueinander unabhängige Bremswirkung durch die Bremseinrichtung sowie die einzelnen Antriebseinrichtungen erzielt werden kann, da diese beispielsweise unabhängig und zeitversetzt zueinander aktiviert bzw. deaktiviert werden können.

So ist es auch denkbar, dass beispielsweise auch die Zuführtransporteinrichtung und/oder die Abführtransporteinrichtung jeweils zumindest eine diese Transporteinrichtungen kontaktierende Bremseinrichtung aufweist, so dass neben der erfindungsgemäßen Vorrichtung auch die Zuführtransporteinrichtung und/oder die Abführtransporteinrichtung nicht nur über eine erzeugte Motorbremse des Antriebsmotors der Antriebseinrichtung, sondern auch über eine zusätzliche mechanische Bremse abgebremst werden können.

Weitere Vorteile, Ziele und Eigenschaften der vorliegenden Erfindung werden anhand nachfolgender Beschreibung anliegender Zeichnung erläutert, in welcher beispielhaft unter anderem eine Anordnung der Bremseinrichtungen in Bezug zu dem Träger oder ein Schaltschema der Bremseinrichtung dargestellt wird.

Komponenten, welche in den Figuren wenigstens im Wesentlichen hinsichtlich ihrer Funktion übereinstimmen, können hierbei mit gleichen Bezugszeichen gekennzeichnet sein, wobei diese Komponenten nicht in allen Figuren gekennzeichnet und erläutert sein müssen.

In den Figuren zeigen:

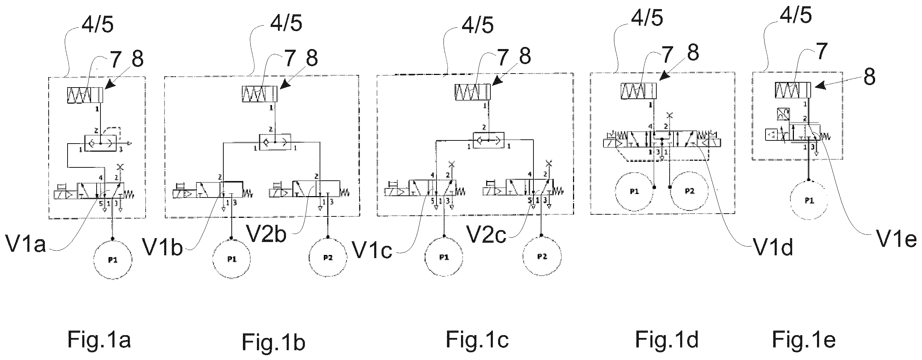

- Fig. 1 a: ein Schaltschema einer Bremseinrichtung 4, 5 in einer ersten aus dem allgemeinen Stand der Technik bekannten Ausführungsform mit einem ersten Ventil V1 a, welches ein 5/2-Wegeventil ist;
- Fig. 1 b: ein Schaltschema einer Bremseinrichtung 4, 5 der erfindungsgemäßen Vorrichtung in einer zweiten Ausführungsform mit einem ersten Ventil V1b und einem zweiten Ventil V2b, welche jeweils zwei 3/2-Wegeventile sind;
- Fig. 1c: ein Schaltschema einer Bremseinrichtung 4, 5 der erfindungsgemäßen Vorrichtung in einer dritten Ausführungsform mit einem ersten Ventil V1c und einem zweiten Ventil V2c, welche jeweils zwei 5/2-Wegeventile sind;
- Fig. 1d: ein Schaltschema einer Bremseinrichtung 4, 5 der erfindungsgemäßen Vorrichtung in einer vierten Ausführungsform mit einem ersten Ventil V1d, welches ein 5/3-Wegeventil ist;
- Fig. 1e: ein Schaltschema einer Bremseinrichtung 4, 5 der erfindungsgemäßen Vorrichtung in einer fünften Ausführungsform mit einem Ventil V1 e, welches ein Proportionalventil ist;
- Fig. 2: eine Draufsicht auf eine schematische Prinzipskizze einer Ausführungsform der erfindungsgemäßen Vorrichtung 1 mit einer Antriebseinrichtung 3 sowie zwei Bremseinrichtungen 4, 5;
- Fig. 3: eine dreidimensionale Ansicht auf eine schematische Prinzipskizze der in Fig. 2 gezeigten Ausführungsform.

In Fig. 1 a ist ein Schaltschema einer aus dem allgemeinen Stand der Technik bekannten Druckluftbremse bzw. Bremseinrichtung 4, 5 mit einem ersten Ventil V1a, welches insbesondere in 5/2-Wegeventil ist, gezeigt, wobei das Ventil V1 a beim Auslösen eines Bremsvorganges die Bremse über ein Schnellentlüftungsventil vollständig entlüftet, wobei eine Bremskraft durch eine Expansion des mindestens einen Federelementes 7 realisiert wird, welches zum Aufbringen von einer Bremskraft von einem Bremsklotz (hier nicht gezeigt) auf eine Bremsscheibe (hier nicht gezeigt) bzw. eine Bremstrommel (hier nicht gezeigt) wirkt.

Bekannterweise benennt die erste Ziffer eines Wegeventils die Anzahl der Anschlüsse, während die zweite Ziffer die Anzahl der Schaltstellungen aufzeigt.

Das in der Fig. 1a gezeigte Ventil V1 a ist nicht regelbar, so dass folglich die vom Ventil V1 a in den Druckzylinder 8 bzw. Bremszylinder 8 eingebrachte oder auch ausgelassene Druckluft P1 nicht entsprechend definierter Erfordernisse und unter Berücksichtigung aktuell vorliegender Bedingungen, wie der Drehgeschwindigkeit des Trägers angepasst werden kann. Vielmehr wird ab dem Zeitpunkt des Beginns der Einleitung des Bremsvorganges der Steuerdruck komplett bzw. vollständig entlüftet bzw. zum Lösen der Bremse wieder vollständig belüftet

In Fig. 1b ist ein Schaltschema einer zweiten Ausführungsform einer Bremseinrichtung 4, 5 zum Abbremsen der Drehgeschwindigkeit des Trägers aufgezeigt, welche in der erfindungsgemäßen Vorrichtung eingesetzt werden kann, um zumindest zeitweise einen linearen Verlauf der Verzögerung der Drehgeschwindigkeit zu realisieren. Das in Fig. 1 a gezeigte Ventil V1 a wurde hierbei durch zwei Ventile V1b und V2b und insbesondere zwei 3/2-Wegeventile ersetzt, welche jeweils mit unterschiedlichen Drücken P1 bzw. P2 beaufschlagt sind und folglich jeweils ein anderes Druckniveau einstellen. D.h., dass das Ventil V1 b eine zum Ventil V2b beispielsweise unterschiedliche Menge an Arbeitsdruck P1 (Pneumatikmedium, wie Druckluft oder Hydraulikmedium) in Richtung des Bremszylinders 8 oder vom Bremszylinder 8 beispielsweise in Richtung eines entsprechenden Reservoirs durchströmen lässt. Demnach können folglich die beiden Ventile V1b und V2b beispielsweise mittels einer hier nicht gezeigten Steuerungseinrichtung abwechselnd, das heißt zeitversetzt zueinander, geschaltet werden, damit die Bremse 4, 5 bzw. die Bremseinrichtung 4, 5 folglich unterschiedliche Bremsmomente bzw. Bremskräfte liefern kann. Das heißt, dass beispielsweise das erste Ventil V1b einen Luftstrom (bei Vorliegen eines pneumatischen Ventils) oder einen Flüssigkeitsstrom (bei Vorliegen eines hydraulischen Ventils) mit einem Druck P1, der beispielsweise in einem Bereich bis 10 bar, vorzugsweise von 1 bis 10 bar und besonders bevorzugt von 5 bis 8 bar liegt, in den Bremszylinder 8 hinein oder aus den Bremszylinder 8 hinausströmen lässt, wodurch folglich ein vollständiges Abbremsen ermöglicht werden könnte. Um jedoch entsprechend dadurch entstehende Drehmomentschwankungen auszugleichen, ermöglicht das zweite Ventil V2b ein geringeres Druckniveau. Das heißt, dass dieses zweite Ventil V2b beispielsweise lediglich einen Luftstrom (bei Vorliegen eines pneumatischen Ventils) oder einen Flüssigkeitsstrom (bei Vorliegen eines hydraulischen Ventils) mit einem Druck P2, der bevorzugt kleiner ist als der Druck P1, in den Bremszylinder hinein oder aus dem Bremszylinder 8 hinausströmen lässt, um somit lediglich eine teilweise Belüftung oder Entlüftung des Bremszylinders 8 und damit eine verminderte Bremswirkung zu erzielen. Durch ein entsprechendes wechselhaftes Schalten zwischen dem ersten Ventil V1b und dem zweiten Ventil V2b wird folglich eine sich wechselnde Bremswirkung bzw. Bremsleistung zwischen einer demnach hohen Bremswirkung sowie einer dazu betrachteten geringeren Bremswirkung erzielt. Durch folglich derart steuerbare Ventile V1 b, V2b werden auf den Träger wirkende Drehmomentschwankungen ausgeglichen.

Ein Anlegen eines derartig unterschiedlichen Druckniveaus mittels zweier zueinander unabhängig und zumindest teilweise zeitlich unterschiedlich schaltbarer Ventile wird beispielsweise auch durch das Schaltschema der Fig. 1c gezeigt, in welcher eine Bremseinrichtung 4, 5 in einer dritten Ausführungsform mit zwei 5/2-Wegeventilen V1c und V2c anstatt der in Fig. 1b gezeigten 3/2-Wegeventile V1b und V2b aufgezeigt ist.

In Fig. 1d ist eine vierte Ausführungsform der Bremseinrichtung 4, 5 der erfindungsgemäßen Vorrichtung aufgezeigt, bei welcher zwar, wie aus dem Stand der Technik bekannt und beispielsweise in Fig. 1 a aufgezeigt, lediglich ein einzelnes Ventil V1 d Verwendung findet, wobei das hier gezeigte 5/3-Wegeventil V1d mittels zweier zueinander unterschiedlichen Drücke P1 und P2 zwei Druckniveaus im Bremszylinder 8 einstellen kann. Das heißt, dass das einzelne Ventil V1d derart mittels einer hier nicht gezeigten Steuerungseinrichtung angesteuert werden kann, dass dieses einmal einen Luftstrom (bei Vorliegen eines pneumatischen Ventils) oder einen Flüssigkeitsstrom (bei Vorliegen eines hydraulischen Ventils) mit einem Druck P1 in den Bremszylinder 8 bzw. aus den Bremszylinder 8 hinausströmen lässt und ein anders Mal einen Luftstrom (bei Vorliegen eines pneumatischen Ventils) oder einen Flüssigkeitsstrom (bei Vorliegen eines hydraulischen Ventils) mit einem im Wesentlichen geringeren Druck P2, wodurch folglich aufgrund des unterschiedlich einstellbaren Druckniveaus in dem Bremszylinder 8 auch eine unterschiedliche Bremswirkung auf den Träger ausgeübt werden kann.

Das in Fig. 1e gezeigte Schaltschema einer fünfte Ausführungsform der Bremseinrichtung 4, 5 der erfindungsgemäßen Vorrichtung weist im Wesentlichen lediglich ein sogenanntes Proportionalventil V1e auf, welches das Druckniveau in dem Bremszylinder entsprechend eines auf das Ventil V1 e wirkenden elektrischen Signals ausführt, so dass der Druck proportional zu dem Signal von dem Ventil V1 e gesteuert wird. Das heißt, dass hier die Drehmomentschwankung ausgleichende Bremswirkung über eine Druckniveauregulierung des Proportionalventiles ermöglicht wird. Mittels der in den Figuren 1b bis 1e aufgeführten Ausführungsformen der Bremseinrichtung 4, 5 und insbesondere deren Ventile V1b bis V1e wird der für die Betätigung der Bremse erforderliche Arbeitsdruck geregelt.

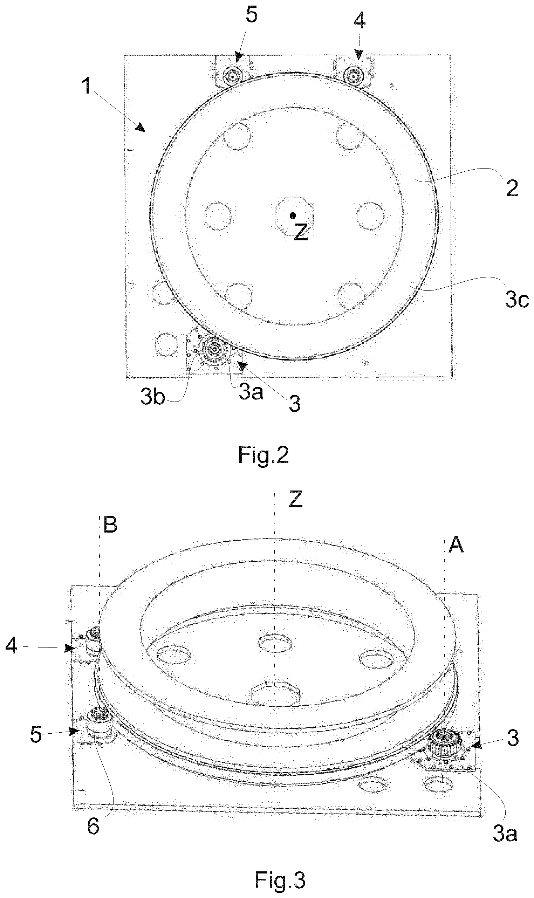

In Fig. 2 ist eine Draufsicht auf eine schematische Darstellung einer Ausführungsform der erfindungsgemäßen Vorrichtung 1 gezeigt, wobei die Vorrichtung 1 einen Träger 2 aufweist, der um eine zentrale Drehachse Z drehbar gelagert ist und von einer Antriebseinrichtung 3 derart angetrieben wird, dass der Träger 2 eine definierte Drehgeschwindigkeit um seine Drehachse Z während einer Behandlung von Behältnissen, wie beispielsweise einem Streckblasen von Vorformlingen zu Behältnissen oder einem Füllen von Behältnissen mit einem entsprechenden Medium, aufweist.

Zudem sind in Fig. 2 zwei zueinander beabstandet angeordnete Bremseinrichtungen 4 und 5 gezeigt, die, wie auch eine Antriebseinrichtung 3, am Außenumfang des Trägers 2 angeordnet sind. Es wäre jedoch auch denkbar, dass die Antriebseinrichtung 3 und/oder zumindest eine der Bremseinrichtungen 4 oder 5 im Träger selbst eingebaut bzw. am Träger selbst angeordnet sind und sich folglich mit dem Träger um dessen Drehachse mit bewegen. D.h., dass die Antriebseinrichtung 3 und/oder zumindest eine der Bremseinrichtungen 4 oder 5 entweder stationär und fest (unbeweglich) gegenüber dem Träger angeordnet sind, oder an diesem angeordnet.

Gemäß Fig. 2 sind die Bremseinrichtungen 4 und 5 der Antriebseinrichtung 3 im Wesentlichen gegenüberliegend an dem Träger angeordnet, wobei die Bremseinrichtungen 4 und 5 auch seitlich zur Antriebseinrichtung 3 betrachtet oder auch auf der gleichen Seite der Antriebseinrichtung 3 an dem Träger 2 angeordnet sein könnten. Die Antriebseinrichtung 3 weist insbesondere ein Antriebsrad 3a auf, welches mittels eines Antriebsmotors 3b angetrieben wird. Das Antriebsrad 3a entspricht konstruktiv der Ausgestaltung eines Zahnrades und greift vornehmlich in ein hier nur schematisch dargestelltes Abtriebsrad 3c ein, welches ebenfalls vorzugsweise gezahnt ist oder eine definierte Oberflächenstruktur aufweist und sich in Umfangsrichtung am Außenumfang vorzugsweise vollständig um den Träger 2 herum erstreckt, so dass durch die Drehbewegung des Antriebsrades 3a auch das Abtriebsrad 3c (formschlüssige und/oder kraftschlüssige Kraft- bzw. Bewegungsübertragung) und folglich der Träger 2 selbst in eine Drehbewegung um dessen Drehachse Z versetzt wird.

In Fig. 3 ist die in Fig. 2 gezeigte Ausführungsform der erfindungsgemäßen Vorrichtung 1 in einer dreidimensionalen Ansicht einer schematischen Prinzipskizze dargestellt, aus welcher deutlich hervorgeht, dass insbesondere die Drehachse A der Antriebseinrichtung 3 die Drehachse Z des Trägers 2 sowie auch die Drehachsen B der Bremseinrichtungen 4 und 5 sich parallel zueinander erstrecken. Die Antriebseinrichtung 3 sowie die Bremseinrichtungen 4 und 5 sind vorteilhaft jeweils in einem unteren Bereich des Trägers angeordnet, wobei die Antriebseinrichtung 3 mittels eines entsprechenden Antriebsrades 3a im Wesentlichen permanent ein entsprechend angeordnetes Abtriebsrad 3c kontaktiert bzw. in dieses eingreift und folglich den Träger 2 im Wesentlichen zumindest indirekt permanent kontaktiert.

Ein direkter Kontakt zwischen dem Antriebsrad 3b und dem Träger 2 findet bevorzugt dann statt, wenn das Abtriebsrad 3c ein Bestandteil des Trägers 2 selbst ist und besonders bevorzugt, wenn zumindest ein Bereich des Außenumfanges des Trägers 2 in Form eines Abtriebrades 3c gestaltet ist, um mit dem Antriebsrad 3b zu agieren. Auch die Bremseinrichtungen 4 und 5 können derart angeordnet sein, dass diese im Wesentlichen in stetigem Kontakt mit dem Außenumfang und insbesondere dem Abtriebsrad 3c des Trägers 2 stehen, wobei während eines Produktionsvorganges und damit während der Behandlung von Behältnissen, bei welcher sich der Träger 2 mit einer definierten Drehgeschwindigkeit um seine Drehachse Z dreht, auch die Bremseinrichtungen 4, 5 mit einer definierten Drehgeschwindigkeit um ihre entsprechende Drehachse B gedreht werden. In diesem Falle würde eine Verzögerung der Drehbewegung bzw. der Drehgeschwindigkeit des Trägers 2 durch eine Reduzierung der Drehbewegung bzw. Drehgeschwindigkeit der Bremseinrichtungen 4 und 5 und/oder der Antriebseinrichtung 3 erfolgen.

Wird ein Bremsvorgang des Trägers 2 eingeleitet, werden folglich hier nicht gezeigte Bremsklötze mit entsprechenden Bremsscheiben bzw. Bremstrommeln 6 in Kontakt gebracht, wodurch durch die zwischen dem Bremsklotz und der Bremstrommel 6 entstehenden Reibung eine Verzögerung der Drehgeschwindigkeit der Bremseinrichtungen und damit des Trägers 2, welcher in Wirkverbindung mit den beiden Bremseinrichtungen 4 und 5 steht, erfolgt. Die Bremseinrichtungen 4 und 5 können dabei wie in den Figuren 1b, 1c, 1d gezeigt zwei Ventilen oder wie in Fig. 1e gezeigt mit einem Proportionalventil ausgestaltet sein.

Des Weiteren wäre es möglich, dass die Bremseinrichtungen 4 und 5 während des Behandlungsvorganges der Behältnisse und damit während einer im Wesentlichen kontinuierlichen Drehgeschwindigkeit des Trägers 2 um dessen Drehachse Z nicht mit dem Träger 2 und insbesondere dem Außenumfang des Trägers 2 in Kontakt stehen. Das heißt, dass in diesem Fall sich jeweils nur der Träger 2 sowie die entsprechende Antriebseinrichtung 3 bzw. dessen Antriebsmotor 3b und Antriebsrad 3a in einer jeweils definierten Drehgeschwindigkeit um deren Drehachsen A bzw. Z drehen würden.

So müsste folglich bei Einleitung eines Verzögerungsvorganges der Drehgeschwindigkeit des Trägers 2 eine Kontaktierung zwischen den einzelnen Bremseinrichtungen 4 und 5 und dem Träger 2 bzw. dessen Außenwandung und insbesondere des Abtriebsrades 3c erfolgen. Eine entsprechende teilweise Kontaktierung zwischen den Bremseinrichtungen 4 und 5 und dem Träger 2 lediglich während eines Bremsvorganges könnte auch damit realisiert werden, dass die jeweiligen Bremseinrichtungen 4 und 5 lediglich Bremsklötze aufweisen, die sich bei Auslösen des Bremszylinders in Richtung des Trägers 2 bewegen, welche dementsprechend eine Bremsscheibe aufweist, die mit den Bremsklötzen zum Erreichen einer Bremswirkung in Kontakt gebracht werden kann.

### Bezugszeichenliste

- 1: Vorrichtung
- 2: Träger
- 3: Antriebseinrichtung
- 3a: Antriebsrad
- 3b: Antriebsmotor
- 3c: Abtriebsrad
- 4,5: Bremseinrichtung
- 6: Bremstrommel
- 7: Federelement
- 8: Bremszylinder
- A: Drehachse der Antriebseinrichtung
- B: Drehachsen der Bremseinrichtung
- Z: Drehachse des Trägers
- P1 und P2: Druck
- V1a, V1c: erstes 5/2 Wegeventil
- V1b: erstes 3/2 Wegeventil
- V1d: erstes 5/3 Wegeventil
- V1e: Proportionalventil
- V2b: zweites 3/2 Wegeventil
- V2c: zweites 5/2 Wegeventil

## Patentansprüche

1. Vorrichtung (1) zum Behandeln von Behältnissen mit einer Vielzahl von auf einem um eine Drehachse (Z) drehbaren Träger (2) angeordneten Behandlungseinheiten, welche die Behältnisse in einer vorgegebenen Weise behandeln, mit einer Antriebseinrichtung (3) zum Antreiben des Trägers und mindestens einer den Träger zumindest zeitweise kontaktierenden mechanischen Bremseinrichtung (4, 5) zum Verzögern einer Drehgeschwindigkeit des Trägers (2),
**dadurch gekennzeichnet, dass**
die Bremseinrichtung (4, 5) mindestens ein Ventil (V1b, V2b, V1c, V2c, V1d, V1e) aufweist, welches mittels einer in Kommunikationsverbindung mit der Bremseinrichtung (4, 5) stehenden Steuerungseinrichtung derart variabel schaltbar ist, dass ein Ableiten oder ein Zuleiten eines unter Druck stehenden fließfähigen Mediums (P1, P2) aus oder zu einem Reservoir der Bremseinrichtung (4, 5) an oder von einem Bremszylinder (8) der Bremseinrichtung (4, 5) zur Erreichung einer Bremswirkung individuell durchführbar ist, wobei das Ventil (V1b, V2b, V1c, V2c, V1d, V1e) ein pneumatisches Ventil oder ein hydraulisches Ventil ist, wobei die Steuerungseinrichtung derart gestaltet ist, dass durch eine variable Schaltung des Ventils (V1b, V2b, V1c, V2c, V1d, V1e) ein für die Betätigung der Bremse notwendiger Arbeitsdruck geregelt wird.

2. Vorrichtung gemäß Anspruch 1, **dadurch gekennzeichnet, dass** das Ventil (V1b, V2b, V1c, V2c, V1d) ein Proportionalventil (V1e) ist.

3. Vorrichtung gemäß einem der vorangegangenen Ansprüche,
**dadurch gekennzeichnet, dass**
eine Mehrzahl von Bremseinrichtungen (4, 5) an einem Außenumfang des Trägers (2) beabstandet zueinander angeordnet sind.

4. Vorrichtung gemäß einem der vorangegangenen Ansprüche,
**dadurch gekennzeichnet, dass**
die Ventile (V1b, V2b, V1c, V2c, V1d, V1e) der Bremseinrichtung (4, 5) bzw. einer Mehrzahl von Bremseinrichtungen (4, 5) abwechselnd und unabhängig zueinander schaltbar sind.

5. Vorrichtung gemäß einem der vorangegangenen Ansprüche,
**dadurch gekennzeichnet, dass**
die Bremseinrichtung (4, 5) mindestens ein vorgespanntes Federelement (7) zum Aufbringen einer Bremskraft aufweist.

6. Vorrichtung gemäß einem der vorangegangenen Ansprüche,
**dadurch gekennzeichnet, dass**
die Antriebseinrichtung (3) ein Direktantrieb zum Antreiben des Trägers (2) ist.

7. Vorrichtung gemäß einem der vorangegangenen Ansprüche,
**dadurch gekennzeichnet, dass**
die Antriebseinrichtung (3) an einen Außenumfang des Trägers (2) angreift.

8. Verfahren zum Behandeln von Behältnissen mit einer Vielzahl von auf einem um eine Drehachse (Z) drehbaren Träger (2) angeordneten Behandlungseinheiten, welche die Behältnisse in einer vorgegebenen Weise behandeln, wobei mittels mindestens einer Antriebseinrichtung (3) der Träger (2) angetrieben und mittels mindestens einer den Träger (2) zumindest zeitweise kontaktierenden mechanischen Bremseinrichtung (4, 5) eine Drehgeschwindigkeit des Trägers (2) verzögert wird,
**dadurch gekennzeichnet, dass**
für eine Verzögerung der Drehgeschwindigkeit des drehbaren Trägers (2) mindestens ein Ventil (V1b, V2b, V1c, V2c, V1d, V1e) der Bremseinrichtung (4, 5) derart durch eine mit der Bremseinrichtung (4, 5) in Kommunikationsverbindung stehende Steuerungseinrichtung variabel geschalten wird, dass ein unter Druck stehendes fließfähiges Medium (P1, P2) aus oder in ein Reservoir der Bremseinrichtung (4, 5) an oder von einem Bremszylinder (8) der Bremseinrichtung (4, 5) individuell abgeleitet wird, wobei das Ventil (V1b, V2b, V1c, V2c, V1d, V1e) ein pneumatisches Ventil oder ein hydraulisches Ventil ist, wobei durch eine variable Schaltung des Ventils (V1b, V2b, V1c, V2c, V1d, V1e) ein für die Betätigung der Bremse notwendiger Arbeitsdruck geregelt wird.

9. Verfahren gemäß Anspruch 8,
**dadurch gekennzeichnet, dass**
die Ventile (V1 b, V2b, V1 c, V2c, V1 d, V1 e) einer oder von mehreren den Träger (2) kontaktierenden Bremseinrichtungen (4, 5) durch die Steuerungseinrichtung bevorzugt abwechselnd und unabhängig zueinander geschalten werden.

10. Verfahren gemäß einem der vorangegangenen Ansprüche 8 oder 9,
**dadurch gekennzeichnet, dass**
bei einem Einleiten einer Verzögerung der Drehgeschwindigkeit des Trägers (2) einzelnen Bremszylindern (8) der Bremseinrichtungen (4, 5) über die Ventile (V1 b, V2b, V1c, V2c, V1d, V1e) der Bremseinrichtungen (4, 5) unterschiedlich große Mengen an fließfähigem Medium zugeführt oder abgeführt werden.

11. Verfahren gemäß einem der vorangegangen Ansprüche 8 bis 10,
**dadurch gekennzeichnet dass**,
das Ventil (V1 b, V2b, V1 c, V2c, V1 d) ein pneumatisches oder hydraulisches Proportionalventil (V1e) ist, welches proportional zum beaufschlagten Druck (P1, P2) geschalten wird.

12. Verfahren gemäß einen der vorangegangen Ansprüche 8 bis 11,
**dadurch gekennzeichnet, dass**
die Antriebseinrichtung (3) zumindest zeitweise als zusätzliche Bremseinrichtung (4, 5) bei der Verzögerung der Drehgeschwindigkeit des Trägers (2) agiert.

## Claims

1. An apparatus (1) for the treatment of containers with a plurality of treatment units which are arranged on a carrier (2) rotatable about an axis of rotation (Z) and which treat the containers in a pre-set manner, with a drive device (3) for driving the carrier and at least one mechanical braking device (4, 5) contacting the carrier at least for a time in order to retard the speed of rotation of the carrier (2),
**characterized in that**
the braking device (4, 5) has at least one valve (V1 b, V2b, V1 c, V2c, V1 d, V1 e) which is capable of being switched in a variable manner by means of a control device connected in terms of communication to the braking device (4, 5), in such a way that a removal or supply of a flowable medium (P1, P2) under pressure from or to a reservoir of the braking device (4, 5) is capable of being carried out individually on or by a braking cylinder (8) of the braking device (4, 5) in order to achieve a braking effect wherein the valve (V1 b, V2b, V1 c, V2c, V1 d, V1 e) is a pneumatic valve or a hydraulic valve wherein the control device is designed in such a way that a necessary working pressure for the pursuit of the brake is regulated by a variable circuit of the valve (V1 b, V2b, V1 c, V1 d, V1 e).

2. An apparatus according to claim 1,
**characterized in that**
the valve (V1 b, V2b, V1 c, V2c, V1 d) is a proportional valve (V1 e).

3. An apparatus according to any one of the preceding claims,
**characterized in that**
a plurality of braking devices (4, 5) are arranged at a distance from one another on an external periphery of the carrier (2).

4. An apparatus according to any one of the preceding claims,
**characterized in that**
the valves (V1 b, V2b, V1 c, V2c, V1 d, V1 e) of the braking device (4, 5) or of a plurality of braking devices (4, 5) respectively are capable of being switched alternately and independently of one another.

5. An apparatus according to any one of the preceding claims,
**characterized in that**
the braking device (4, 5) has at least one pre-stressed spring element (7) for exerting a braking force.

6. An apparatus according to any one of the preceding claims,
**characterized in that**
the drive device (3) is a direct drive for driving the carrier (2).

7. An apparatus according to any one of the preceding claims,
**characterized in that**
the drive device (3) engages on an external periphery of the carrier (2).

8. A method for the treatment of containers with a plurality of treatment units which are arranged on a carrier (2) rotatable about an axis of rotation (Z) and which treat the containers in a pre-set manner, wherein the carrier (2) is driven by means of at least one drive device (3) and a speed of rotation of the carrier (2) is retarded by means of at least one mechanical braking device (4, 5) which contacts the carrier (2) at least for a time,
**characterized in that**
for a retardation of the speed of rotation of the rotatable carrier (2) at least one valve (V1 b, V2b, V1 c, V2c, V1 d, V1 e) of the braking device (4, 5) is switched in a variable manner by a control device connected in terms of communication to the braking device (4, 5), in such a way that a flowable medium (P1, P2) under pressure is drawn individually from or into a reservoir of the braking device (4, 5) on or from a braking cylinder (8) of the braking device (4, 5) wherein the valve (V1 b, V2b, V1 c, V2c, V1 d, V1 e) is a pneumatic valve or a hydraulic valve wherein a necessary working pressure for the pursuit of the brake is regulated by a variable circuit of the valve (V1 b, V2b, V1 c, V2c, V1 d, V1 e).

9. A method according to claim 8,
**characterized in that**
the valves (V1 b, V2b, V1 c, V2c, V1 d, V1 e) of one or more braking devices (4, 5) contacting the carrier (2) are switched preferably alternately and independently of one another by the control device.

10. A method according to one of the preceding claims 8 or 9,
**characterized in that**,
when a retardation of the speed of rotation of the carrier (2) is initiated, quantities - of different size - of flowable medium are supplied to or removed from individual brake cylinders (8) of the braking devices (4, 5) by way of the valves (V1 b, V2b, V1 c, V2c, V1 d, V1 e) of the braking devices (4, 5).

11. A method according to any one of the preceding claims 8 to 10,
**characterized in that**
the valve (V1 b, V2b, V1 c, V2c, V1 d) is a pneumatic or hydraulic proportional valve (V1 e) which is switched proportionally to the stressed pressure (P1, P2).

12. A method according to any one of the preceding claims 8 to 11,
**characterized in that**
the drive device (3) acts at least for a time as an additional braking device (4, 5) during the retardation of the speed of rotation of the carrier (2).

## Revendications

1. Dispositif (1) de traitement de récipients comprenant une pluralité d'unités de traitement agencées sur un support (2) pouvant tourner autour d'un axe de rotation (Z), lesquelles traitent les récipients d'une manière prédéfinie, un dispositif d'entraînement (3) destiné à entraîner le support et au moins un dispositif de freinage mécanique (4, 5) en contact au moins par intermittence avec le support et destiné à ralentir une vitesse de rotation du support (2),
**caractérisé en ce que**
le dispositif de freinage (4, 5) comprend au moins une soupape (V1 b, V2b, V1 c, V2c, V1 d, V1e), laquelle peut être commutée de façon variable au moyen d'un dispositif de commande en liaison de communication avec le dispositif de freinage (4, 5), de telle sorte qu'une évacuation ou une amenée d'un milieu coulant sous pression (P1, P2) d'un ou à un réservoir du dispositif de freinage (4, 5) peut être réalisée individuellement, sur ou depuis un cylindre de freinage (8) du dispositif de freinage (4, 5) pour obtenir une action de freinage, dans lequel la soupape (V1 b, V2b, V1 c, V2c, V1 d, V1e) est une soupape pneumatique ou une soupape hydraulique, dans lequel le dispositif de commande est conçu de manière qu'une pression de travail nécessaire pour l'actionnement du frein est régulée par une commutation variable de la soupape (V1 b, V2b, V1 c, V2c, V1 d, V1e).

2. Dispositif selon la revendication 1,
**caractérisé en ce que**
la soupape (V1 b, V2b, V1 c, V2c, V1 d) est une soupape proportionnelle (V1 e).

3. Dispositif selon l'une quelconque des revendications précédentes,
**caractérisé en ce que**
une pluralité de dispositifs de freinage (4, 5) sont agencés à distance les uns des autres sur une périphérie extérieure du support (2).

4. Dispositif selon l'une quelconque des revendications précédentes,
**caractérisé en ce que**
les soupapes (V1 b, V2b, V1 c, V2c, V1 d, V1e) du dispositif de freinage (4, 5) ou d'une pluralité de dispositifs de freinage (4, 5) peuvent être commutées tour à tour et indépendamment les unes des autres.

5. Dispositif selon l'une quelconque des revendications précédentes,
**caractérisé en ce que**
le dispositif de freinage (4, 5) comprend au moins un élément ressort (7) précontraint destiné à appliquer une force de freinage.

6. Dispositif selon l'une quelconque des revendications précédentes,
**caractérisé en ce que**
le dispositif d'entraînement (3) est un entraînement direct permettant d'entraîner le support (2).

7. Dispositif selon l'une quelconque des revendications précédentes,
**caractérisé en ce que**
le dispositif d'entraînement (3) agit sur une périphérie extérieure du support (2).

8. Procédé de traitement de récipients comprenant une pluralité d'unités de traitement agencées sur un support (2) pouvant tourner autour d'un axe de rotation (Z), lesquelles traitent les récipients d'une manière prédéfinie, dans lequel une vitesse de rotation du support (2) étant ralentie au moyen d'au moins un dispositif d'entraînement (3) du support (2) et au moyen d'au moins un dispositif de freinage mécanique (4, 5) en contact au moins par intermittence avec le support (2),
**caractérisé en ce que**
pour un ralentissement de la vitesse de rotation du support (2) rotatif, au moins une soupape (V1 b, V2b, V1 c, V2c, V1 d, V1e) du dispositif de freinage (4, 5) est commutée de façon variable par un dispositif de commande en liaison de communication avec le dispositif de freinage (4, 5), de telle sorte qu'un milieu coulant sous pression (P1, P2) est évacué individuellement d'un ou dans un réservoir du dispositif de freinage (4, 5) sur ou depuis un cylindre de freinage (8) du dispositif de freinage (4, 5), dans lequel la soupape (V1 b, V2b, V1 c, V2c, V1 d, V1e) est une soupape pneumatique ou une soupape hydraulique,
dans lequel une pression de travail nécessaire pour l'actionnement du frein est régulée par une commutation variable de la soupape (V1 b, V2b, V1 c, V2c, V1 d, V1e).

9. Procédé selon la revendication 8,
**caractérisé en ce que**
les soupapes (V1 b, V2b, V1 c, V2c, V1 d, V1e) d'un ou de plusieurs dispositifs de freinage (4, 5) en contact avec le support (2) sont commutées par le dispositif de commande de préférence tout à tour et indépendamment les unes des autres.

10. Procédé selon l'une quelconque des revendications précédentes 8 ou 9,
**caractérisé en ce que**
lors d'un déclenchement d'un ralentissement de la vitesse de rotation du support (2), des quantités de milieu coulant de différente importance sont amenées à chaque cylindre de freinage (8) des dispositifs de freinage (4, 5) par l'intermédiaire des soupapes (V1 b, V2b, V1 c, V2c, V1 d, V1e) ou en sont évacuées.

11. Procédé selon l'une quelconque des revendications 8 à 10,
**caractérisé en ce que**
la soupape (V1 b, V2b, V1 c, V2c, V1 d) est une soupape proportionnelle (V1e) pneumatique ou hydraulique, laquelle est commutée de manière proportionnelle à la pression (P1, P2) appliquée.

12. Procédé selon l'une quelconque des revendications 8 à 11,
**caractérisé en ce que**
le dispositif d'entraînement (3) agit au moins par intermittence comme un dispositif de freinage (4, 5) additionnel lors du ralentissement de la vitesse de rotation du support (2).
